# EUROPÄISCHE PATENTSCHRIFT

(11) **EP 1 425 336 B1**
(45) Veröffentlichungstag und Bekanntmachung des Hinweises auf die Patenterteilung: **26.03.2008**
(21) Anmeldenummer: 02794771.2
(22) Anmeldetag: 10.08.2002
(51) Int. Cl.: C08J 5/22

(54) **VERFAHREN ZUR HERSTELLUNG EINER MEMBRAN AUS VERBRÜCKTEM POLYMER UND BRENNSTOFFZELLE**
METHOD FOR PRODUCING A MEMBRANE FROM A CROSS-LINKED POLYMER BLEND, AND CORRESPONDING FUEL CELL
PROCEDE DE FABRICATION D'UNE MEMBRANE CONSTITUEE D'UN MELANGE A BASE DE POLYMERE PONTE ET PILE A COMBUSTIBLE ASSOCIEE

(30) Priorität: 16.08.2001 DE 10140147
(43) Veröffentlichungstag der Anmeldung: 09.06.2004
(73) Patentinhaber: BASF Fuel Cell GmbH, 65926 Frankfurt am Main (DE)
(72) Erfinder: KIEFER, Joachim, 66679 Losheim am See (DE); UENSAL, Oemer, 55128 Mainz (DE)
(74) Vertreter: Luderschmidt, Schüler & Partner
(86) Internationale Anmeldenummer: PCT/EP2002/008992
(87) Internationale Veröffentlichungsnummer: WO 2003/016384

(56) Entgegenhaltungen:
- WO-A-00/44816
- WO-A-02/070592
- US-A- 5 599 639

## Beschreibung

Die vorliegende Erfindung betrifft eine Blend-Membran aus verbrücktem Polymer, ein Verfahren zur deren Herstellung und eine Brennstoffzelle enthaltend eine solche Membran.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas, und der anderen Elektrode ein Oxidationsmittel, wie Sauerstoffgas, zugeführt und dadurch chemische Energie in elektrische Energie umwandelt.

Der Elektrolyt ist für Wasserstoffionen, d.h. Protonen, aber nicht für reaktive Gase wie das Wasserstoffgas und das Sauerstoffgas durchlässig.

Eine Brennstoffzelle weist in der Regel mehrere Einzelzellen sogenannte MEU's (Membrane-Electrode-Unit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt. So verwendet man als Materialien für Polymerelektrolytmembranen beispielsweise Perfluorsulfonsäurepolymere oder Komplexe aus basischen Polymeren und starken Säuren.

Das Perfluorsulfonsäurepolymer weist im allgemeinen ein Perfluorkohlenwasserstoffgerüst, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylengruppe gebundenen Sulfonsäuregruppe. Die Sulfonsäuregruppe geht unter Abgabe eines Wasserstoffions in ein Anion über und leitet daher Protonen.

Es sind bereits Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, wie Polybenzimidazole, in eine starke Säure, wie Phosphorsäure, Schwefelsäure usw., eingetaucht wird.

Eine solche Brennstoffzelle, bei der eine derartige Polymerelektrolytmembran eingesetzt wird, hat den Vorteil, daß sie bei Temperaturen von 100°C oder darüber betrieben werden kann.

In J. Electrochem. Soc., Band 142, Nr. 7, 1995, S. L121-L123 wird die Dotierung des eines Polybenzimidazols in Phosphorsäure beschrieben.

In WO97/37396 und der korrespondierenden US-PS 5,716,727 wird ein Verfahren zur Herstellung einer Polymerelektrolytmembran beschrieben, bei dem man ein Polybenzimidazol in Trifluoressigsäure löst, die Lösung dann mit Phosphorsäure versetzt und anschließend das Lösungsmittel entfernt.

Selbst wenn ein basisches Polymer an sich eine ausreichende mechanische Festigkeit aufweist, kommt es vor, daß die mechanische Festigkeit des basischen Polymers durch Imprägnieren mit einer starken Säure zwecks Verleihung von Protonenleitfähigkeit bis zu einem unzureichenden Grad abnimmt. Daher ist eine weitere Verbesserung der mechanischen Festigkeit des basischen Polymers zwecks Anwendung des Komplexes aus dem basischen Polymer und der starken Säure auf die Elektrolytmembran für die Brennstoffzelle usw. erwünscht.

In WO 00/44816 finden sich Ansätze zur Verbesserung der mechanischen Festigkeit und des Quellverhaltens einer Membran. Hierbei wird eine Lösung enthaltend ein basisches Polymer und ein Verbrückungsreagenz zum Gießen der Membran eingesetzt und anschließend die Verbrückung durchgeführt. Auch diese Membranen sind hinsichtlich ihrer mechanischen Festigkeit noch verbesserungswürdig.

In der deutschen Patentanmeldung Nr. 10110752 finden sich weitere Ansätze die mechanische Festigkeit zu Verbessern. Hierbei wird eine Lösung enthaltend ein basisches Polymer und ein Verbrückungsreagenz zum Gießen der Membran eingesetzt und anschließend die Verbrückung in Gegenwart eines basichen Katalysators durchgeführt. Auch diese Membranen sind hinsichtlich ihrer Bruchzähigkeit noch verbesserungswürdig.

In der deutschen Patentanmeldung Nr. 10052242.4 finden sich ebenfalls weitere Ansätze die mechanische Festigkeit zu Verbessern. Hierbei wird eine Lösung enthaltend ein basisches Polymer und ein Polysulfon zum Gießen der Membran eingesetzt. Auch diese Membranen sind hinsichtlich ihrer Bruchzähigkeit bzw. des Quellverhaltens noch verbesserungswürdig

Es wurde nunmehr gefunden, daß eine Verbrückung der basischen Polymeren und des Verbrückungsreagenz in Gegenwart eines basischen Katalysators Abhilfe schafft, wenn anstelle des basischen Polymeren ein Blend des basischen Polymeren mit einem Polysulfon eingesetzt wird.

Gegenstand der vorliegenden Erfindung sind Membran aus verbrücktem Polymer erhältlich durch ein Verfahren umfassend die folgenden Schritte:
A. Herstellung einer Lösung enthaltend ein basisches Polymer (Polymer I) mit mindestens einer Aminogruppe in einer Wiederholungseinheit und mindestens einem Verbrückungsreagenz und zusätzlich mindestens ein basischer Katalysator in mindestens einem geeigneten Lösemittel,
B. Gießen einer Folie mit der aus Schritt A) erhaltenen Lösung
C. Entfernen des Lösemittels aus Schritt A)
D. Durchführung der Verbrückungsreaktion in der gemäß Schritt C) erhaltenen Folie
E. Dotierung der gemäß Schritt D) erhaltenen Folie mit einer starken Säure dadurch gekennzeichnet, daß in Schritt A) neben dem basischen Polymer (Polymer
I) mindestens ein weiteres Polymer auf Basis von einem Polysulfon (Polymer II) zugemischt wird.

In der Regel löst man das basische Polymer und das Polysulfon in dem Lösungsmittel oder dem Lösungsmittelgemisch, versetzt die erhaltene Lösung mit dem Verbrückungsreagenz und dem basischen Katalysator und vermischt anschließend innig. Es ist gleichermaßen möglich die Polymere in getrennten Lösungen desselben Lösemittels herzustellen und diese zu vereinigen.

Hinsichtlich des Verbrückungsreagenzes bestehen keinerlei Beschränkungen, sofern es sich um eine Verbindung mit einer funktionellen Gruppe, die mit einer Aminosäure reagiert, handelt. Das Verbrückungsreagenz weist vorzugsweise mindestens zwei funktionelle Gruppen zur Umsetzung mit der Aminogruppe im Molekül auf und ist in der Regel eine organische Verbindung. Beispiele für derartige Gruppen sind Epoxidgruppen und Isocyanatgruppen. Wenn jedoch die Epoxidgrupe und die Isocyanatgruppe im Verbrückungsmittelmolekül vorliegen, so reagieren die beiden Gruppen miteinander, was daher nicht bevorzugt ist.
Das Verbrückungsreagenz weist daher vorzugsweise mindestens zwei Epoxidgruppen oder Isocyanatgruppen pro Molekül auf.

Beispiele für die organische Verbindung mit nicht weniger als zwei Epoxidgruppen und nicht weniger als zwei Isocyanatgruppen sind eine Epoxyverbindung der Formel (II) sowie eine organische Verbindung der Formel (III). Außerdem können die Wasserstoffatome in den Epoxidgruppen der Epoxyverbindung der Formel (II) durch ein Halogen oder eine Niederalkylgruppe substituiert sein. 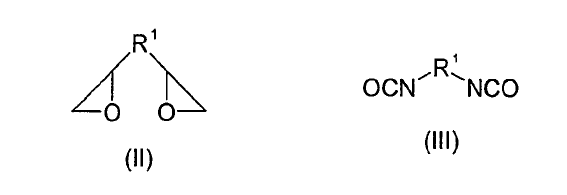 In der obigen Formel steht R¹ für eine Kohlenwasserstoffgruppe mit 1 bis 30 Kohlenstoffatomen, beispielsweise eine geradkettige oder verzweigte Niederalkylengruppe mit 1 bis 15 Kohlenstoffatomen, die durch eine Nitrogruppe, eine Sauerstoffatom, eine Epoxidgruppe oder eine Arylgruppe substituiert sein kann, und eine geradkettige oder verzweigte Niederalkoxygruppe mit 1 bis 15 Kohlenstoffatomen, die durch eine Nitrogruppe, eine Epoxidgruppe oder eine Arylgruppe substituiert sein kann. Als Arylgruppe werden auch Heteroaryle verstanden die 4 bis 20 Kohlenstoffatome aufweisen, insbesondere bevorzugte Aryle sind im einzelnen Phenyl, Napthyl und Indenyl.

Der Begriff Niederalkyl bedeutet bei Verbindungen der Formel (II) und (III) eine Alkylgruppe mit 1 bis 15 Kohlenstoffatomen.

Der Begriff Aryl bzw. Heteroaryl bedeutet bei Verbindungen der Formel (II) und (III) ein Aryl bzw. Heteroaryl mit 4 bis 20 Kohlenstoffatomen.

Beispiele für R¹ sind die folgenden Gruppen. 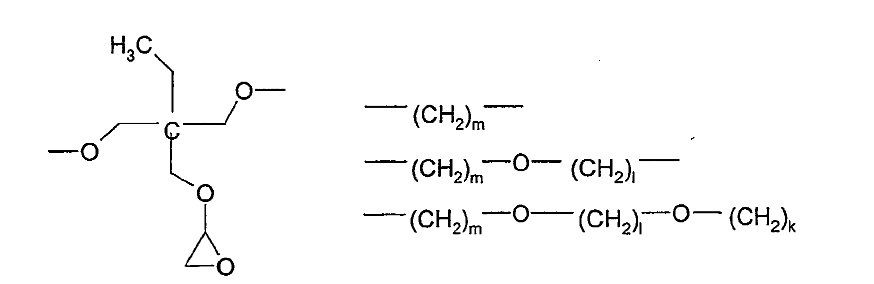 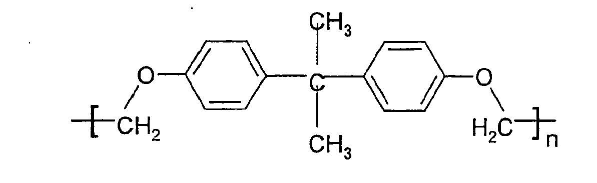 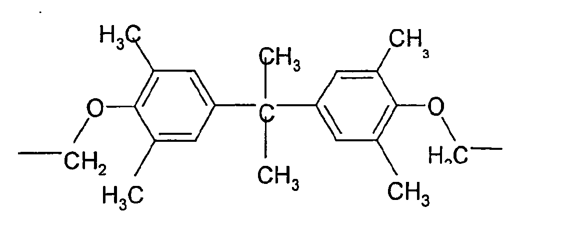 In den obigen Formeln sind m, k und l gleich oder verschieden und stehen jeweils für eine ganze Zahl von 1 bis 6. Der Index n steht für eine ganze Zahl von 1 bis 10, vorzugsweise ist n gleich 1.

Ein Verbrückungsreagenz mit drei funktionellen Gruppen im Molekül, die mit einer Aminogruppe reagieren, ist beispielsweise die folgende Verbindung. 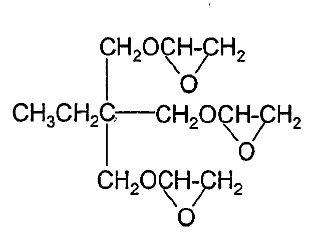 Besonders bevorzugte Verbrückungsreagenzien sind Bis-phenol-A-glycidylether [BPAGDE] und 1,4 Butyl-diglycidylether.

Die Lösung gemäß Schritt A) enthält vorzugsweise 0,1 bis 7 Mol-% des Verbrückungsreagenzes pro Einheit des basischen Polymers, weiter bevorzugt 0,5 bis 6 Mol-% des Verbrückungsreagenzes pro Einheit des basischen Polymers, und besonders bevorzugt 1 bis 6 Mol-% des Verbrückungsreagenzes pro Einheit des basischen Polymers. Ist der Anteil an Verbrückungsreagenz zu hoch, so wird die Imprägnierung des basischen Polymers mit einer starken Säure schwierig. Ist der Anteil an Verbrückungsreagenz dagegen zu gering, so wird die mechanische Festigkeit der Polymermembran nicht ausreichend verbessert.

Die Lösung gemäß Schritt A) enthält vorzugsweise zwischen 1 und 99 Gewichtsprozent des basischen Polymers, wobei das Verbrückungsreagenz und der basische Katalysator enthalten ist, und zwischen 99 und 1 Gewichtsprozent des Polymeren auf Basis von Polysulfon.

Besonders bevorzugt enthält die Lösung zwischen 5 und 95 Gewichtsprozent des basischen Polymers, wobei das Verbrückungsreagenz und der basische Katalysator enthalten ist, und zwischen 95 und 5 Gewichtsprozent des Polymeren auf Basis von Polysulfon.

Insbesondere bevorzugt enthält die Lösung zwischen 10 und 90 Gewichtsprozent des basischen Polymers, wobei das Verbrückungsreagenz und der basische Katalysator enthalten ist, und zwischen 90 und 10 Gewichtsprozent des Polymeren auf Basis von Polysulfon.

In einer weiteren Ausführungsform der Erfindung enthält die Lösung zwischen 50 und 90 Gewichtsprozent des basischen Polymers, wobei das Verbrückungsreagenz und der basische Katalysator enthalten ist, und zwischen 50 und 10 Gewichtsprozent des Polymeren auf Basis von Polysulfon.

Als basisches Polymer wird ein basisches Polymer mit mindestens einer Aminogruppe in einer Wiederholungseinheit verwendet. Da die Aminogruppe in der Wiederholungseinheit vorliegt, ist das Polymer basisch, und die Aminogruppe kann mit dem Verbrückungsmittel reagieren. Im Hinblick auf die Reaktivität gegenüber dem Verbrückungsmittel handelt es sich bei der Aminogruppe in der Wiederholungseinheit vorzugsweise um ein primäre oder sekundäre Aminogruppe.

Die Wiederholungseinheit im basischen Polymer enthält vorzugsweise einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Das basische Polymer ist vorzugsweise in dem gleichen Lösungsmittel wie das Polymere auf Basis von Polysulfon löslich. Im einzelnen sind in einer Lösung vorzugsweise mindestens 1 Gewichtsprozent des basischen Polymers und weiter bevorzugt nicht weniger als 2 Gewichtsprozent gelöst. Diese Merkmale erleichtern die Bildung einer einheitlichen Polymermembran, ohne daß sich darin Poren bilden.

Als basisches Polymer kommen im Rahmen der vorliegenden Erfindung u.a. Polybenzimidazole, Polyimidazole, Polyvinylimidazole, Polybenzbisimidazole sowie deren Copolymere in Betracht. Darunter sind Polybenzimidazole bevorzugt.

Bevorzugte Polybenzimidazole entsprechen der folgenden Formel: 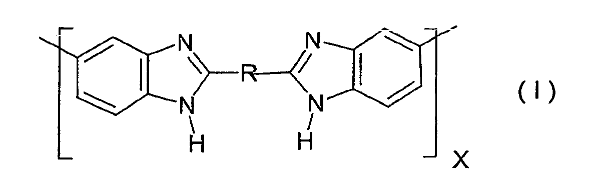 worin R für Alkylen, Perfluoralkylen oder einen Substituenten einer der folgenden Formeln: 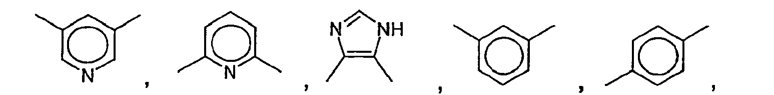 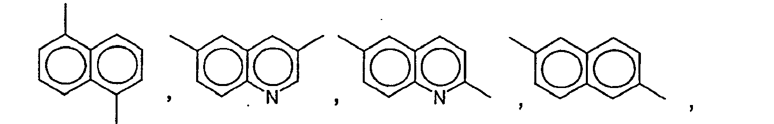 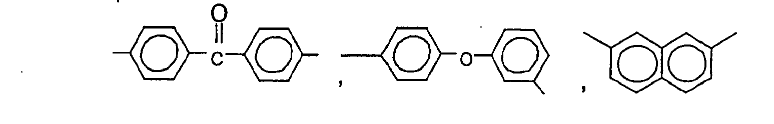 steht, wobei außerdem jede Alkylen- und Perfuoralkylengruppe, die R sein kann, vorzugsweise 1 bis 10 Kohlenstoffatome und besonders bevorzugt 1 bis 6 Kohlenstoffatome aufweist.

Als basische Polymere können auch Polybenzbisimidazole der folgenden Formel verwendet werden: 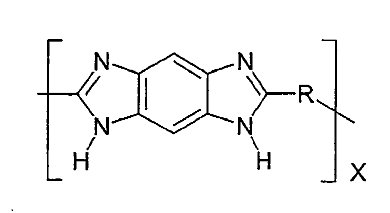 worin R die oben angegebene Bedeutung hat.

In die Aminogruppe der Polybenzimidazole oder Polybenzbisimidazole kann über einen Linker eine stark saure Gruppe, wie eine Sulfonsäuregruppe (-SO₃H), eine Phosphorsäuremonoestergruppe (-O-P(=O)(OH)₂) usw., eingeführt werden.

Als Linker kommen die oben aufgeführten Gruppen R in Betracht. Alternativ dazu kann der Linker eine lineare oder verzweigte Kohlenwasserstoffgruppe mit 1 bis 20 Kohlenstoffatomen, die mit einem Fluoratome substituiert und durch ein Sauerstofatom (-O-) oder eine Gruppe der Formel -N(R²)-, worin R² für ein Wasserstoffatom oder eine Niederalkylgruppe mit 1 bis 6 Kohlenstoffatome steht, unterbrochen sein kann. Als Kohlenwasserstoffgruppe kommen in Betracht: eine Niederalkylgruppe mit 1 bis 20 Kohlenstoffatomen, die durch ein Sauerstoffatom oder eine Arylengruppe, wie eine Phenylengruppe, unterbrochen und verzweigt sein kann; und eine Arylengruppe, wie eine Phenylengruppe, die mit einer Niederalkylgruppe mit 1 bis 20 Kohlenstoffatomen, einer Niederalkoxygruppe mit 1 bis 20 Kohlenstoffatomen, einer Sulfonsäuregruppe, einer Aminogruppe, einem Fluoratom usw. substituiert sein kann. Alternativ dazu kommt eine Gruppe der Formel -(CR³R⁴)ₚ-O-(CR⁵R⁶)_{q}-
worin p und q unabhängig voneinander jeweils für eine ganze Zahl von 1 bis 10 stehen und

R³, R⁴, R⁵, und R⁶ unabhängig voneinander jeweils gleich oder verschieden sind und für ein Wasserstoffatom; ein Fluoratom; eine Niederalkylgruppe mit 1 bis 6 Kohlenstoffatomen oder eine Niederalkoxygruppe mit 1 bis 6 Kohlenstoffatomen; eine Arylgruppe, wie eine Phenylgruppe, die mit einer Niederalkylgruppe mit 1 bis 6 Kohlenstoffatomen, einer Niederalkoxygruppe mit 1 bis 6 Kohlenstoffatomen, einer Sulfonsäuregruppe, einer Aminogruppe, einem Fluoratom usw. substituiert sein kann; oder eine stark saure Gruppe wie eine Sulfonsäuregruppe, eine Phosphorsäuremonoestergruppe und vorzugsweise ein Wasserstoffatom; ein Fluoratom oder eine Niederalkylgruppe mit 1 bis 6 Kohlenstoffatomen stehen, in Betracht.

So kann man beispielsweise in die Polybenzimidazole oder Polybenzbisimidazole eine Gruppe der Formel >N-(CR³R⁴)ᵣ-SO₃H, worin N für ein Stickstoffatom im Imidazolring der Polybenzimidazole oder Polybenzbisimidazole steht; r für eine ganze Zahl von 1 bis 20 steht und R³ und R⁴ die oben aufgeführten Bedeutungen besitzen, einführen.

Bei der Einführung einer stark sauren Gruppe am Stickstoffatom der Polybenzimidazole oder Polybenzbisimidazole über den Linker ist es nicht notwendig, daß der Linker und die starke Säure an allen Stickstoffatomen eingeführt werden. Man kann den Linker und die starke Säure auch nur an einigen der Stickstoffatome einführen, wobei an den anderen Stickstoffatomen gebundene Wasserstoffatome verbleiben. Da die verbleibenden Wasserstoffatome mit dem Verbrückungsmittel reagieren können, ist dies bevorzugt.

Beispielsweise kann man den Linker und die starke Säure an 5 bis 85 Prozent der Stickstoffatome des basischen Polymers, wie die Stickstoffatome des Imidazolrings, insbesondere an 10 bis 75 Prozent der Stickstoffatome und ganz besonders an 15 bis 45 Prozent der Stickstoffatome einführen.

Das basische Polymer kann durch Umsetzung mit einem Sulton in Lösung sulfoniert oder sulfoalkyliert werden. Hierbei verwendet man beispielsweise eine Lösung von 1 bis 30 Gewichtsprozent des basischen Polymers und insbesondere eine Lösung von 5 bis 20 Gewichtsprozent des basischen Polymers. Als Lösungsmittel für die Sulfonierung oder Sulfoalkylierung verwendet man vorzugsweise das Lösungsmittel für das flüssige Medium, das weiter unten beschrieben wird.

Eine Beschreibung dieser Reaktion findet sich beispielsweise in US-PS 5,599,639, US-PS 4,814,399 und Ahmed Mstafa, Chemical Review, S. 195-223(1954). Auf alle diese Druckschriften wird hiermit ausdrücklich Bezug genommen.

Das basische Polymer stammt vorzugsweise aus der Gruppe bestehend aus Polybenzimidazolen, Polyimidazolen, Polyvinylimidazolen und Polybenzbisimidazolen.

Alternativ dazu kann das basische Polymer bereits in seiner Wiederholungseinheit eine stark saure Gruppe aufweisen. Die Gegenwart der starken Säure sorgt für Protonenleitfähigkeit.

Gemäß der vorliegenden Erfindung enthält das Polymerblend ein weitere Polymer auf Basis von Polysulfon.

Als Polymere auf Basis von Polysulfon werden Polymere verstanden welche wiederkehrende Einheiten mit verknüpfenden Sulfon-Gruppen entsprechend den allgemeinen Formeln 2A, 2B, 2C, 2D, 2E, 2F und/oder 2G aufweise:

-O-R-SO₂-R- (2A)

-O-R-SO₂-R-O-R- (2B)

-O-R-SO₂-R-O-R-R- (2C)

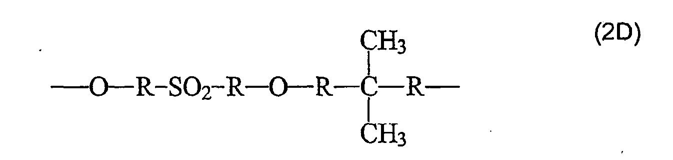

-O-R-SO₂-R-R-SO₂-R- (2E)

-O-R-SO₂-R-R-SO₂-R-O-R-SO₂-] (2F)

⁅O-R-SO₂-R⁆⁅SO₂-R-R⁆ (2G),

worin die Reste R unabhängig voneinander gleich oder verschieden 1,2-Phenylen, 1,3-Phenylen, 1,4-Phenylen, 4,4'-Biphenyl, ein zweiwertiger Rest eines Heteroaromaten, ein zweiwertiger Rest eines C10-Aromaten und/oder ein zweiwertiger Rest eines C14-Aromaten sind.
Beispiele für Heteroaromaten sind Pyridin und Chinolin. Ein Beispiel für einen C10-Aromaten ist Naphthalin, für einen C14-Aromaten Phenanthren.

Zu den im Rahmen der vorliegenden Erfindung bevorzugten Polysulfone gehören Homo- und Copolymere, beispielsweise statistische Copolymere, wie ®Victrex 720 P und ®Astrel an. Besonders bevorzugte Polysulfone sind: 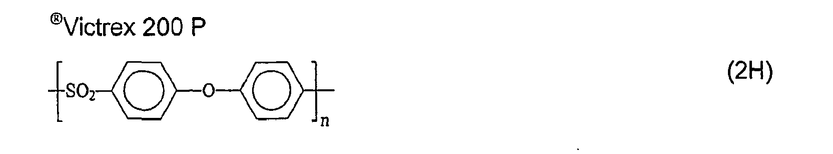 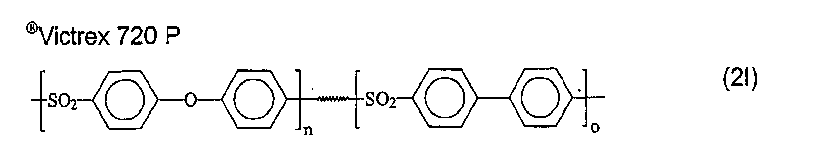 mit n > o 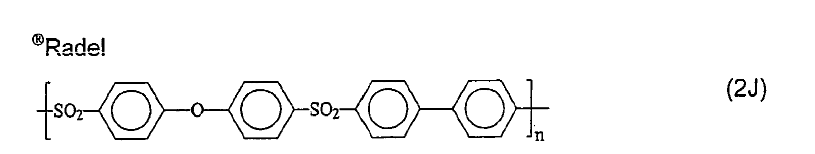 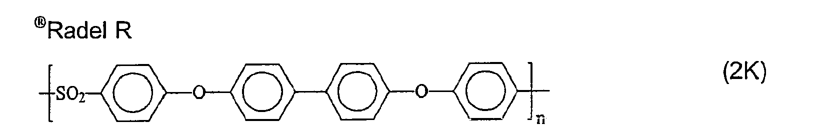 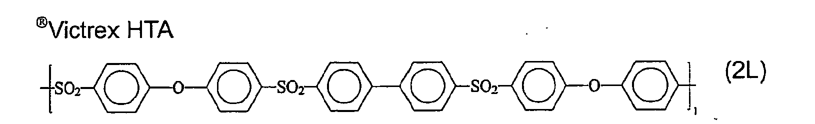 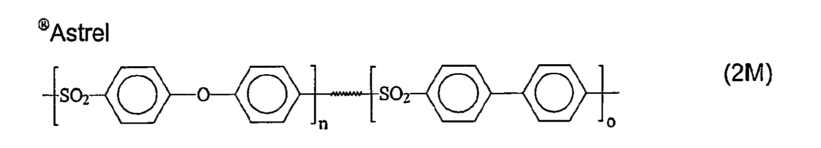 mit n < o

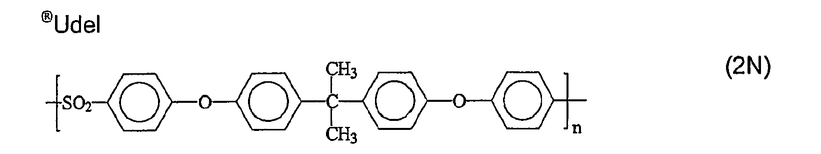

Ein ganz besonders bevorzugtes Polysulfon ist ^{®}Radel R.

Die erfindungsgemäß einsetzbaren Polysulfone können gegebenenfalls substituiert sein.
Vorzugsweise weisen die erfindungsgemäß eingesetzten Polysulfone keine Sulfonsäuregruppen (-SO₃H) oder protonierte Sulfonsäuregruppen (-SO₃⁻M⁺) auf. M⁺ steht hierbei für ein anorganisches oder organisches Kation. Derartige Kationen können die mechanischen Eigenschaften der dotierten Kunststoffmembran verschlechtern.

In einer bevorzugten Ausführungsform der vorliegenden Erfindung sind die Polysulfone nicht substituiert.

In noch einer bevorzugten Ausführungsform der vorliegenden Erfindung ist das Zahlenmittel des Molekulargewichts von den Polysulfonen größer als 30.000 g/mol.

Als Lösungsmittel für das flüssige Medium ist ein Lösungsmittel bevorzugt, das nicht mit dem Verbrückungsmittel reagiert. Bevorzugt ist ein organisches Lösungsmittel, insbesondere ein polares organisches Lösungsmittel. Als organische Lösungsmittel seien im einzelnen niedere Amide wie N-Methyl-2-pyrrolidon, N, N-Dimethylacetamid, Dimethylformamid; Dimethylsulfoxid usw. genannt. Man kann auch ein Gemisch dieser Lösungsmittel verwenden.
Bei dem flüssigen Medium kann es sich entweder um eine Lösung oder um eine Suspension handeln. Im Fall der Lösung sind die Polymere in dem Lösungsmittel gelöst. Im Fall der Suspension sind als dispergierte Phase dienende Teilchenen aus den Polymeren in einem als kontinuierliche Phase dienenden Lösungsmittel dispergiert. Alternativ dazu kann es sich bei dem flüssigen Medium um eine Aufschlämmung oder eine Paste handeln.

Anschließend wird aus der Lösung gemäß Schritt A) eine Folie erzeugt (Schritt B). Hierzu wird die Lösung beispielsweise auf einem planen Substrat ausgegossen und dann bei Normaldruck oder unter vermindertem Druck getrocknet. Alternativ dazu kann man den Polymerblend mit Hilfe eines Rakelverfahrens in die Folie überführen.

Bei dem Substrat für das Vergießen oder das Rakelverfahren kann es sich um einen Halbleiter; wie eine Siliziumscheibe, ein synthetisches Polymer, wie Poly(ethylenterephthalat), oder ein Metall, wie rostfreien Stahl, handeln. Wird beispielsweise eine Rolle aus Poly(ethylenterephthalat) als Substrat verwendet, so kann man zur Herstellung einer Folie mit konstanter Breite und beliebiger Dicke eine kontinuierlich arbeitende Vergußanlage verwenden. In diesem Fall wird die Lösung auf das Substrat aufgegossen und läuft durch einen Spalt mit vorgegebenem Abstand und dann durch einen Trockenofen zum Trocknen mittels Warmwind.

Alternativ dazu kann die Folienbildung gemäß dem in der japanischen Anmeldung Nr. Hei 10-125560 beschriebenen Verfahren erfolgen.
Hierbei wird die Lösung in einen Zylinder mit zylinderförmiger Innenfläche gegossen, und anschließend der Zylinder in Drehung versetzt wird. Gleichzeitig läßt man das Lösungsmittel durch die durch die Drehung verursachte Zentrifugalkraft abdampfen; wobei sich auf der Innenfläche des Zylinders eine zylindrische Polymerfolie weitgehend einheitlicher Dicke bildet.

Mit diesem Verfahren kann ein Polymerblend mit einer einheitlichen Matrix ausgebildet werden.
Dieses in der japanischen Patentanmeldung Hei 10-125560 beschriebene Verfahren ist ebenfalls Bestandteil der vorliegenden Beschreibung.

Das Entfernen des Lösungsmittel in Schritt C) kann durch Trocknung erfolgen. Zwecks leichterer Trocknung kann das Erhitzen unter vermindertem Druck von nicht mehr als 1 Atmosphäre, vorzugsweise nicht mehr als 0,1 Atmosphären und weiter bevorzugt nicht mehr als 0,05 Atmosphären erfolgen.

Vorteilhafterweise erfolgt die Verbrückung in Schritt D) durch Erhitzen, so daß die Verbrückung (Schritt D) und die Trocknung (Schritt C) zugleich in einem Schritt erfolgen kann.

Alternativ dazu kann man das Erhitzen zwecks Trocknung der Folie auf eine Temperatur begrenzen, die unterhalb der Reaktionstemperatur des Verbrückungsreagenzes liegt und anschließend die Folie zwecks Verbrückung stark erhitzen. Zum Erhitzen zwecks Trocknung oder zum Erhitzen zwecks Verbrückung kann man Warmluft verwenden.

Die Verbrückung gemäß Schritt D) kann auch durch eine Bestrahlung mit elektromagnetischen Wellen (photochemische Reaktion) erfolgen.

Die Verbrückung gemäß Schritt D) kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Eine zusätzliche Vernetzung kann durch Einwirken von Hitze in Gegenwart von Luftsauerstoff an der Oberfläche erfolgen. Diese Härtung der Membranoberfläche verbessert die Eigenschaften der Membran zusätzlich.

Die beiden zuletzt genannten Methoden können auch nach der Imprägnierung/Dotierung erfolgen bzw. wiederholt werden. Hierdurch können die Materialeigenschaften gezielt beeinflußt werden.

Die Verbrückung bewirkt, das die Epoxidverbindung der Formel (IIa) mit dem Polybenzimidazol der Formel (I) unter Verbrückung einer Polymerkette umgesetzt wird.

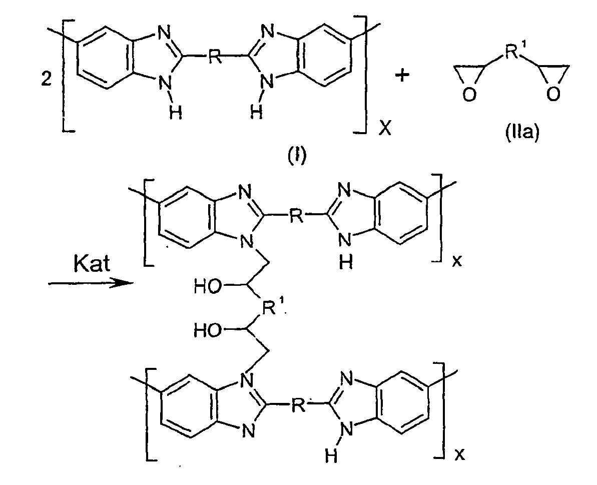

In den obigen Formeln hat R¹ die oben aufgeführte Bedeutung.

Ganz analog wird die Isocyanatverbindung der Formel (III) mit dem Polybenzimidazol der Formel (I) unter Verbrückung einer Polymerkette umgesetzt.

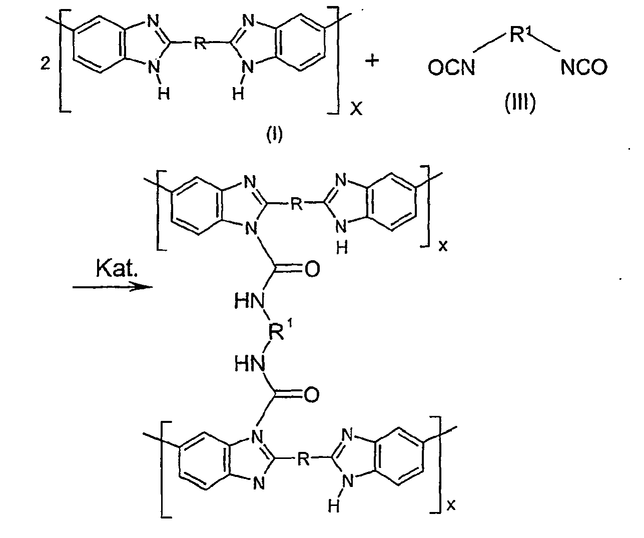

In den obigen Formeln hat R¹ die oben aufgeführte Bedeutung.

In den obigen Formeln werden der einfacheren Darstellung halber verschiedene Polymerketten verbrückt. Es ist jedoch auch möglich, daß eine Verbrückung der gleichen Polymerkette und eine Innenseite einer Wiederholungseinheit erfolgt.

Im Rahmen der vorliegenden Erfindung kann man das basische Polymer zwecks Verleihung von Protonenleitfähigkeit mit einer starken Säure imprägnieren (Schritt E). Die Imprägnierung/Dotierung kann mit der starken Säure in Form des flüssigen Mediums erfolgen. Alternativ dazu kann man die Imprägnierung/Dotierung mit der starken Säure aber auch nach Folienbildung (Schritt C), aber vor dem Erhitzen bzw. der Verbrückung durchführen. Die Imprägnierung mit der starken Säure kann aber auch nach dem Erhitzen erfolgen.

Die Ausführungsform, bei der mit der starken Säure in Form des flüssigen Mediums imprägniert wird, bezieht sich auf die Zugabe einer starken Säure zum flüssigen Medium. Vorzugsweise reagiert das Verbrückungsreagenz nicht mit der starken Säure.

Die Imprägnierung mit der starken Säure erfolgt vorzugsweise nach dem Erhitzen der Folie gemäß Schritt C). Der verbrückte, basische Polymerblend besitzt eine verbesserte mechanische Festigkeit und läßt sich einfacher handhaben. Da das Verbrückungsreagenz schon abreagiert ist, ist die Reaktion der starken Säure mit nicht umgesetztem Verbrückungsreagenz sehr begrenzt.

Die Folie aus verbrücktern, basischem Polymerblend kann in eine starke Säure eingetaucht werden, so daß die Folie mit der starken Säure imprägniert wird und zur Membran wird. Man kann den basische Polymerblend in eine hochkonzentrierte starke Säure mit einer Temperatur von mindestens 20°C, vorzugsweise mindestens 40°C und weiter bevorzugt mindestens 50° über einen Zeitraum von höchstens 5 Stunden und vorzugsweise höchstens 1 Stunde eintauchen.

Die Durchführung des Eintauchschritts bei 20°C oder darüber ermöglicht eine Verkürzung der Eintauchzeit in der starken Säure. Im Hinblick auf die Stabilität der Polymere und der für die Handhabung von starken Säuren bei hohen Temperaturen erforderlichen Sicherheitsvorkehrungen erfolgt das Eintauchen bei höchstens 200°C oder darunter, vorzugsweise bei 100°C oder darunter und ganz besonders bevorzugt bei 80°C oder darunter.

Als starke Säure kommen protische starke Säuren in Betracht. Beispielsweise verwendet man bevorzugt Phosphorsäure und/oder Schwefelsäure.

Im Rahmen der vorliegenden Beschreibung versteht man unter "Phosphorsäure" Polyphosphorsäure, Phosphonsäure (H₃PO₃), Orthophosphorsäure (H₃PO₄), Pyrophosphorsäure (H₄P₂O₇), Triphosphorsäure (H₅P₃O₁₀) und Metaphosphorsäure. Die Phosphorsäure, insbesondere Orthophosphorsäure, hat vorzugsweise eine Konzentration von mindestens 80 Gewichtsprozent, besonders bevorzugt eine Konzentration von mindestens 85 Gewichtsprozent, noch weiter bevorzugt eine Konzentration von mindestens 89 Gewichtsprozent. Der Grund dafür ist darin zu sehen, daß das basische Polymer bei zunehmender Konzentration der starken Säure mit einer größeren Zahl von Molekülen starker Säure imprägniert werden kann.

Insofern die Folie aus Schritt C) ein Polysulfon mit Sulfonsäuregruppen enthält, kann die Behandlung gemäß Schritt E) auch in Wasser oder einer wässrigen, verdünnten Säure erfolgen.

Die erfindungsgemäß erhaltene Polymerelektrolyt-Blendmembran, nämlich der Komplex aus dem basischen Polymerblend und der starken Säure, ist protonenleitend und kann daher vorzugsweise als Elektrolyt für Zellen verwendet werden. Trotzdem ist der Polymerelektrolyt nicht auf die Verwendung für Zellen beschränkt, sondern kann auch als Elektrolyt für ein Anzeigeelement, ein elektrochromes Element oder verschiedene Sensoren verwendet werden.

Als basische Katalysatoren kommen basische Oxide und Hydroxyde der I., II. und III. Hauptgruppe des Periodensystems, Hydride der I. Hauptgruppe des Periodensystems und Lithium-organyle in Frage, vorzugsweise KOH, LiOH, NaOH, RbOH, CsOH, Ca(OH)₂, Mg(OH)₂, Ba(OH)₂, LiH, NaH, KH, Methyl-Lithium und Butyl-Lithium.

Der basische Katalysator wird in Mengen von 0,01 bis 5 Mol-%, vorzugsweise 0,02 bis 3 Mol-%, insbesondere bevorzugt 0,5 bis 2,5 Mol-%, bezogen auf das eingesetzte Verbrückungsreagenz, in die Lösung gemäß Schritt A) zugesetzt.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann bei Schritt A.

Nicht limitierende Beispiele für Protonenleitende Füllstoffe sind
- Sulfate wie:: CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄,
- Phosphate wie: Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀,
- Polysäure wie: H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO_{3,} H₂MoO₄
- Selenite und Arsenide wie: (NH₄)₃H(SeO₄)₂, UO₂AsO₄, (NH₄)₃H(SeO₄)₂, KH₂A_{S}O₄, Cs₃H(SeO₄)₂, Rb₃H(SeO₄)₂,
- Oxide wie: Al₂O₃, Sb₂O₅, ThO₂, SnO₂, ZrO₂, MoO₃
- Silikate wie: Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite
- Säuren wie: HCIO₄, SbF₅
- Füllstoffe wie: Carbide, insbesondere SiC, Si₃N₄, Fasern, insbesondere Glasfasern, Glaspulvern und/oder Polymerfasern, bevorzugt auf Basis von Polyazolen.

Als weiteres kann diese Membran auch perfluorierte Sulfonsäure Additive (0,1-20 wt%, bevorzugt 0,2-15 wt%, ganz bevorzugt 0,2- 10 wt%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)
Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Ais weiteres kann die Membran auch als Additive enthalten, die die im Betrieb bei der Sauerstoffreduktion erzeugten Peroxidradikale abfangen (primäre Anitoxidanzien) oder zerstören (sekundäre Antioxidanzien) und dadurch wie in JP2001118591 A2 beschrieben Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.
Nicht limitierende Beispiele für solche Additive sind:
Bis(trifluormethyl)nitroxid, 2,2-Diphenyl-1-pikrinylhydrazyl, Phenole, Alkylphenole, sterisch gehinderte Alkylphenole wie zum Beispiel Irganox, aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel lrgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Gegenstand der Erfindung ist ferner die bevorzugte Verwendung der erfindungsgemäßen verbrückten Polymerelektrolyt-Blendmembran in einer Membran-Elektroden-Einheit (MEU) für Brennstoffzellen.

Die Membran-Elektroden-Einheit für eine Brennstoffzelle enthält eine erfindungsgemäße Polymerelektrolytmembran und zwei Elektroden, zwischen denen die Polymerelektrolytmembran sandwichartig angeordnet ist. Weiterhin kann die

Die Elektroden weisen jeweils eine katalytisch aktive Schicht und eine Gasdiffusionsschicht zur Zuführung eines Reaktionsgases zur katalytisch aktiven Schicht auf. Die Gasdiffusionsschicht ist porös, damit reaktives Gas hindurchtreten kann.

Die erfindungsgemäße verbrückte Polymerelektrolyt-Blendmembran kann als Elektrolytmembran verwendet werden. Außerdem kann man die Elektrolytmembran sowie einen Vorläufer für eine MEU mit einer oder beiden katalytisch aktiven Schichten herstellen. Des weiteren kann man die MEU auch durch Fixieren der Gasdiffusionsschicht am Vorläufer herstellen.

Ein weiterer Gegenstand der vorliegenden Erfindung ist eine Brennstoffzelle mit mehreren MEU's, die jeweils eine nach dem obigen Verfahren hergestellte Membran aus verbrücktem Polymer und zwei Elektroden, zwischen denen die Membran aus verbrücktem Polymer sandwichartig angeordnet ist, enthalten.

Die mittels des erfindungsgemäßen Verfahren hergestellten Blend-Membranen zeigen eine deutlich erhöhte Bruchzähigkeit.

Die erfindungsgemäßen vernetzten Blend-Membranen zeigen nach einer Dotierung in 85 Gew%-iger Phosphorsäure (72 Stunden bei 20°C) eine Bruchzähigkeit von mehr als 250 kJ/m², vorzugsweise mehr als 300 kJ/m², insbesondere mehr als 350 kJ/m².

### Beispiele:

Nachfolgend wird die Erfindung durch Beispiele und Vergleichsbeispiele eingehender erläutert, ohne daß die Erfindung auf diese Beispiele beschränkt werden soll.

### Beispiel 1

### a) Herstellung einer PBI-DMAc-Lösung

®Celazole der Firma Celanese wird bei Temperaturen von 200 °C über einen Zeitraum von 2-4 Stunden in N,N-Dimethylacetamid "DMAc" (15 % Gewichtsprozent Celazole) gelöst.

### b) Herstellung einer Polysulfon-Lösung

Polysulfon ®Radel-R 5700 der Firma Amoco (oder Polyethersulfon ®Ultrason E 6000 der Fa. BASF) wird in N,N-Dimethylacetamid oder N-Methylpyrrolidon gelöst (15 Gew.-%). Die Polysulfonlösung wird über eine Drucknutsche bei Raumtemperatur filtriert.

### c) Herstellung der Polymermischung in Lösung

Die PBI-DMAc-Lösung und die Polysulfon-Lösung werden bei einer Temperatur von 60 - 95°C mit einem langsam laufenden Ankerrührer gemischt. Niedrigere Temperaturen bzw. hohe Umlaufgeschwindigkeiten des Rührers führen durch den Weissenbergeffekt, den die Polybenzimidazol-Lösung zeigt, zu einer zumindest teilweisen Entmischung der Lösung. Die gemischte Lösung wird durch Anlegen eines Vakuums für einen Zeitraum von mindestens 15 Minuten bei einer Temperatur von 80°C entgast.

### d) Herstellung der Kunststoffmembran

Die Lösung wird auf einer Glasplatte in einer staubarmen Umgebung (Laminar-Flow-Box) in einer Stärke von ca. 250 µm gerakelt und in einem mit einem Staubfilter versehenen Umlufttrockenschrank bei Temperaturen von bis zu 120°C getrocknet. Die getrocknete Kunststoffmembran wird von der Glasplatte abgezogen.

### e) Dotierung der Kunststoffmembran

Die Membran wird 72 Stunden bei Raumtemperatur mit 85-95 %iger Phosphorsäure benetzt.

### Hergestellte Membranen:

| Polymertyp | Membrantyp | Blendkomponente Gew.-% | Vernetzergehalt Mol-% (bezogen auf eingesetzte PBI) | Katalysatorgehalt Mol-% (bezogen auf eingesetzte PBI) |
|---|---|---|---|---|
| unmodifiziertes PBI | A | - | - | - |
| Blendmembran | B | 20 % PES | - | - |
| vernetzte Membran | C | - | 3% DGEBPA | 0,04 |
| Blend und Vernetzer | D | 20% PES | 3% DGEBPA | 0,04 |

### Mechanische Eigenschaften der Membranen

Die Messung der mechanischen Eigenschaften wird mittels uniaxialem Zugversuch an streifenförmigen Proben mit einer Breite von 15mm und Länge von 120 mm gemäss ISO/R527 durchgeführt. Der Zugversuch erfolgt bei einer Temperatur von 100°C mit einer Dehngeschwindigkeit von 50 mm/min. Die Ergebnisse der Mittelwerte von mindestens 5 Messungen sind in folgender Tabelle zusammengefasst.

| Membrantyp | c(H3PO4) | Zugfestigkeit (MPa) | Bruchdehnung (%) | Bruchzähigkeit (kJ/m2) |
|---|---|---|---|---|
| A | 85% | 0,9 | 53 | 31 |
| B | 85% | 3 | 122 | 224 |
| C | 85% | 3,4 | 131 | 225 |
| D | 85% | 4,9 | 152 | 370 |
| | | | | |
| B | 87% | 1,33 | 60 | 66 |
| C | 87% | 0,4 | 37 | 12 |
| D | 87% | 4,95 | 152 | 380 |
| | | | | |
| B | 89% | 0,46 | 38 | 12 |
| C | 89% | 0,07 | 93 | 2,1 |
| D | 89% | 1,8 | 107 | 108 |
| | | | | |
| D | 95% | 0,23 | 31 | 5,6 |

### Säureaufnahme und Leitfähigkeit

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines Ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregeit. Nach Erreichen der Temperatur wird die Probe vor dem Start der Messung 10 Minuten auf dieser Temperatur gehalten. Als Vergleichswert wird die spezifische Leitfähigkeit bei 120°C verwendet.
Die Dotierung aller Membrantypen erfolgt durch Lagerung Phosphorsäure während 72h bei Raumtemperatur in einem geschlossenen Glasgefäss. Zur Bestimmung der Säureaufnahme wird nach der Dotierung eine kreisrunde Probe mit einem Durchmesser von 3 cm ausgestanzt. Dieses Stück wird in ein mit 100 ml Wasser gefülltes Becherglas gegeben und die freigesetzte Säure mit 0,1 M NaOH titriert über den Equivalentpunkt titriert. Anschliessend wird die Probe im Vakuumtrockenschrank bei 150°C während 15h und p<1mbar getrocknet und das Trockengewicht bestimmt. Aus dem Trockengewicht und der Menge an bis zum Equivalentpunkt verbauchter NaOH wird dann die Ionenaustauschkapazität (IEC) bzw der Säuregehalt ausgedrückt durch n(H3PO4)/n(PBI) bestimmt.
Die Ergebnisse dieser Messungen sind in folgender Tabelle zusammengefasst.

| Membrantyp | c(H3PO4) | IEC (meq/g) | n(H3PO4)/n(PBI) | Leitfähigkeit bei 120°C |
|---|---|---|---|---|
| A | 85% | 88 | 9 | 0,093 |
| B | 85% | 70 | 7,2 | 0,076 |
| C | 85% | 74,8 | 7,7 | 0,089 |
| D | 85% | 67,6 | 6,9 | 0,07 |
| | | | | |
| B | 87% | 96 | 9,9 | 0,094 |
| C | 87% | 113,8 | 11,7 | 0,093 |
| D | 87% | 75,1 | 7,7 | 0,078 |
| | | | | |
| B | 89% | 120 | 12,3 | 0,117 |
| C | 89% | 175,9 | 18,1 | 0,134 |
| D | 89% | 107,8 | 11,1 | 0,105 |
| | | | | |
| D | 95% | 324 | 33,2 | 0,149 |

## Patentansprüche

1. Membran aus verbrücktem Polymer erhältlich durch ein Verfahren umfassend die folgenden Schritte:
A. Herstellung einer Lösung enthaltend ein basisches Polymer (Polymer I) mit mindestens einer Aminogruppe in einer Wiederholungseinheit und mindestens einem Verbrückungsreagenz und zusätzlich mindestens ein basischer Katalysator in mindestens einem geeigneten Lösemittel,
B. Gießen einer Folie mit der aus Schritt A) erhaltenen Lösung
C.Entfernen des Lösemittels aus Schritt A)
D.Durchführung der Verbrückungsreaktion in der gemäß Schritt C) erhaltenen Folie
E.Dotierung der gemäß Schritt D) erhaltenen Folie mit einer starken Säure **dadurch gekennzeichnet, daß** in Schritt A) neben dem basischen Polymer (Polymer I) mindestens ein weiteres Polymer auf Basis von einem Polysulfon (Polymer II) zugemischt wird.

2. Membran gemäß Anspruch 1, **dadurch gekennzeichnet, daß** das Verbrückungsreagenz mindestens zwei Epoxidgruppen oder Isocyanatgruppen pro Molekül aufweist

3. Membran gemäß Anspruch 1, **dadurch gekennzeichnet, daß** das Verbrückungsreagenz mindestens eine Verbindung der Formel (II) und/oder (III) 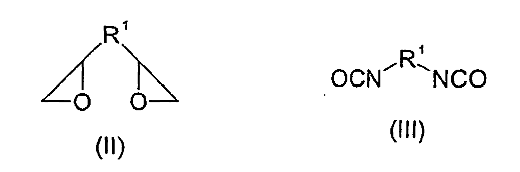 worin R¹ für eine Kohlenwasserstoffgruppe mit 1 bis 30 Kohlenstoffatomen steht, ist.

4. Membran gemäß Anspruch 3, **dadurch gekennzeichnet, daß** das R¹ gleich 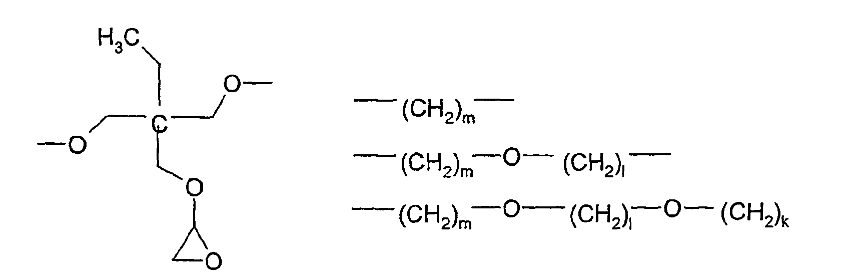 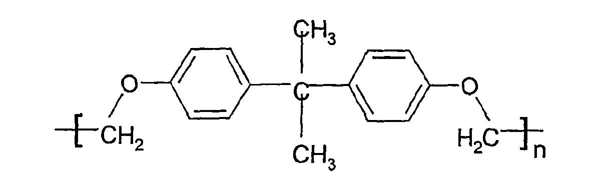 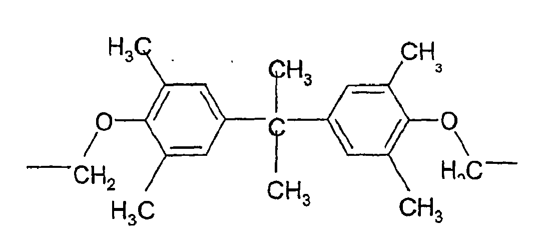 worin m, k und l jeweils gleich oder verschieden sind und für eine ganze Zahl von 1 bis 6 stehen, n für eine ganze Zahl von 1 bis 10, vorzugsweise gleich 1, steht.

5. Membran gemäß Anspruch 1, **dadurch gekennzeichnet, daß** das Verbrückungsreagenz mindestens drei Epoxidgruppen pro Molekül enthält.

6. Membran gemäß Anspruch 5, **dadurch gekennzeichnet, daß** Verbückungsreagenz die Verbindung 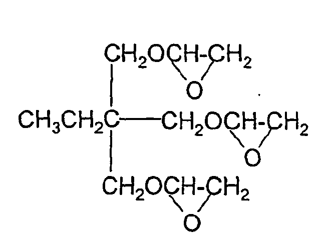 ist.

7. Membran gemäß Anspruch 1, **dadurch gekennzeichnet, daß** Verbückungsreagenz Bis-phenol-A-glycidylether [BPAGDE] und/oder 1,4 Butyl-diglycidylether ist.

8. Membran gemäß Anspruch 1, **dadurch gekennzeichnet, daß** die Lösung gemäß Schritt A) 0,1 bis 7 Mol-% des Verbrückungsreagenzes pro Einheit des basischen Polymers enthält.

9. Membran gemäß Anspruch 1, **dadurch gekennzeichnet, daß** als basisches Polymer Polybenzimidazole, Polyimidazole, Polyvinylimidazole, Polybenzbisimidazole sowie deren Copolymere eingesetzt werden.

10. Membran gemäß Anspruch 9, **dadurch gekennzeichnet, daß** als Polybenzimidazole solche mit der Formel: 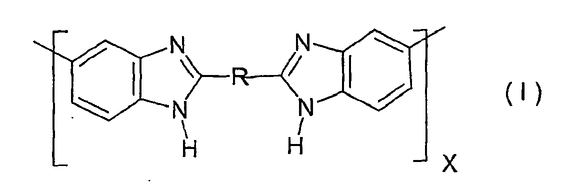 worin R für Alkylen, Perfluoralkylen oder einen Substituenten einer der folgenden Formeln: 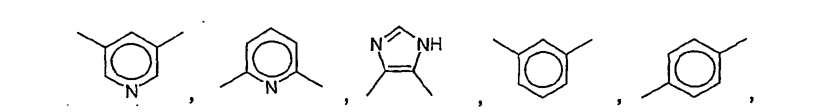 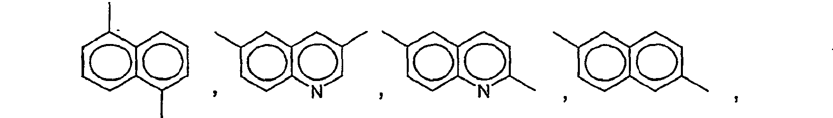 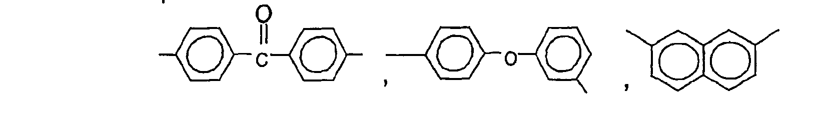 steht, wobei außerdem jede Alkylen- und Perfuoralkylengruppe, die R sein kann, vorzugsweise 1 bis 10 Kohlenstoffatome und besonders bevorzugt 1 bis 6 Kohlenstoffatome aufweist, eingesetzt wird.

11. Membran gemäß Anspruch 9, **dadurch gekennzeichnet, daß** als Polybenzbisimidazole solche mit der Formel 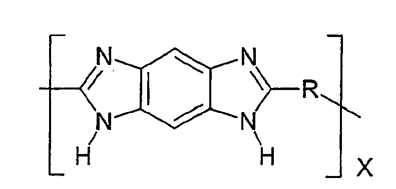 worin R die unter Anspruch 10 angegebene Bedeutung hat, verwendet werden.

12. Membran gemäß Anspruch 1, **dadurch gekennzeichnet, daß** als weiteres Polymer auf Basis von einem Polysulfon (Polymer II) ein oder mehrere Polysulfone welche wiederkehrende Einheiten mit verknüpfenden Sulfon-Gruppen entsprechend den allgemeinen Formeln 2A, 2B, 2C, 2D, 2E, 2F und/oder 2G aufweisen:
-O-R-SO₂-R- (2A)
-O-R-SO₂-R-O-R- (2B)
-O-R-SO₂-R-O-R-R- (2C) 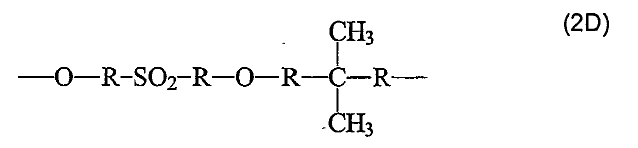
-O-R-SO₂-R-R-SO₂-R- (2E)
-O-R-SO₂-R-R-SO₂-R-O-R-SO₂-] (2F)
⁅O-R-SO₂-R⁆⁅SO₂-R-R⁆ (2G),
worin die Reste R unabhängig voneinander gleich oder verschieden 1,2-Phenylen, 1,3-Phenylen, 1,4-Phenylen, 4,4'-Biphenyl, ein zweiwertiger Rest eines Heteroaromaten, ein zweiwertiger Rest eines C10-Aromaten und/oder ein zweiwertiger Rest eines C14-Aromaten sind, wobei das Polysulfon vorzugsweise keine Sulfonsäuregruppen aufweist.

13. Membran gemäß Anspruch 12, **dadurch gekennzeichnet, daß** das Zahlenmittel des Molekulargewichts des Polysulfons größer als 30.000 g/mol ist.

14. Membran gemäß Anspruch 1, **dadurch gekennzeichnet, daß** die Lösung gemäß Schritt A) zwischen 1 und 99 Gewichtsprozent des basischen Polymers, wobei das Verbrückungsreagenz und der basische Katalysator enthalten ist, und zwischen 99 und 1 Gewichtsprozent des Polymeren auf Basis von Polysulfon, enthält.

15. Membran gemäß Anspruch 1, **dadurch gekennzeichnet, daß** die Verbrückung in Schritt D) durch Erhitzen erfolgt, so daß die Verbrückung (Schritt D) und die Trocknung (Schritt C) zugleich in einem Schritt erfolgt.

16. Membran gemäß Anspruch 1, **dadurch gekennzeichnet, daß** die Trocknung der Folie bei einer Temperatur durchgeführt wird, die unterhalb der Reaktionstemperatur des Verbrückungsreagenzes liegt und anschließernd die Folie zwecks Verbrückung weiter erhitzt wird.

17. Membran gemäß Anspruch 1, **dadurch gekennzeichnet, daß** die Verbrückung in Schritt D) durch eine Bestrahlung mit elektromagnetischen Wellen (photochemische Reaktion) erfolgt.

18. Membran gemäß Anspruch 1, **dadurch gekennzeichnet, daß** als starke Säure in Schritt E) Phosphorsäure und/oder Schwefelsäure eingesetzt wird.

19. Membran gemäß Anspruch 1, **dadurch gekennzeichnet, daß** die Behandlung in Schritt E) mit Wasser oder einer wässrigen Säure durchgeführt und das Polysulfon Sulfonsäuregruppen und/oder protonierte Sulfonsäuregruppen aufweist.

20. Membran gemäß Anspruch 1, **dadurch gekennzeichnet, daß** als basische Katalysatoren basische Oxide und Hydroxyde der I., II. und III. Hauptgruppe des Periodensystems, Hydride der I. Hauptgruppe des Periodensystems und Lithium-organyle eingesetzt werden.

21. Membran gemäß Anspruch 20, **dadurch gekennzeichnet, daß** als basische Katalysatoren KOH, LiOH, NaOH, RbOH, CsOH, Ca(OH)₂, Mg(OH)₂, Ba(OH)₂, LiH, NaH, KH, Methyl-Lithium und/oder Butyl-Lithium eingesetzt werden.

22. Membran gemäß Anspruch 1, **dadurch gekennzeichnet, daß** der basische Katalysator in Mengen von 0,01 bis 5 Mol-%, bezogen auf das eingesetzte Verbrückungsreagenz, in die Lösung gemäß Schritt A) zugesetzt wird.

23. Verwendung der Membran gemäß einem der Ansprüche 1 bis 22 zur Herstellung von Membran-Elektroden-Einheiten.

24. Verwendung der Membran gemäß einem der Ansprüche 1 bis 22 zur Herstellung von Brennstoffzellen.

25. Membran-Elektroden-Einheit enthaltend mindestens eine Elektrode und mindestens eine Membran gemäß einem der Ansprüche 1 bis 22

26. Brennstoffzelle enthaltend mindestens Membran-Elektroden-Einheit gemäß Anspruch 25.

## Claims

1. A membrane comprising a bridged polymer obtainable by a process comprising the following steps:
A. preparing a solution comprising a basic polymer (polymer I) having at least one amino group per repeating unit and at least one bridging reagent and, in addition, at least one basic catalyst in at least one suitable solvent,
B. casting a film using the solution obtained from step A),
C. removing the solvent from step A),
D. carrying out the bridging reaction in the film obtained in step C),
E. doping the film obtained in step D) with a strong acid,
wherein at least one further polymer based on a polysulfone (polymer II) in addition to the basic polymer (polymer I) is added in step A).

2. A membrane as claimed in claim 1, wherein the bridging reagent has at least two epoxide groups or isocyanate groups per molecule.

3. A membrane as claimed in claim 1, wherein the bridging reagent is at least one compound of the formula (II) and/or (III) 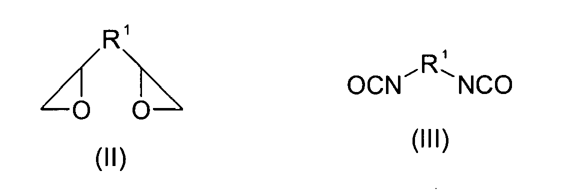 where R¹ is a hydrocarbon group having from 1 to 30 carbon atoms.

4. A membrane as claimed in claim 3, wherein R¹ is 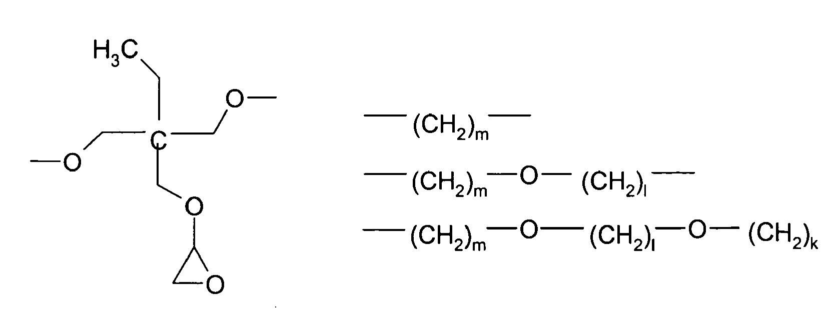 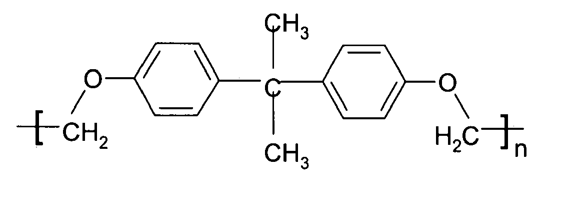 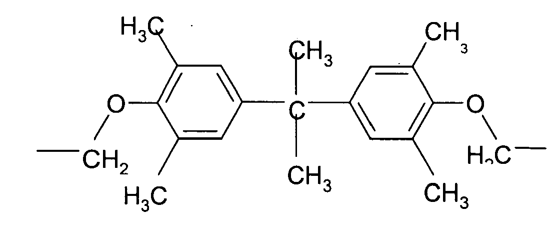 where m, k and l are identical or different and are each an integer from 1 to 6, n is an integer from 1 to 10, preferably 1.

5. A membrane as claimed in claim 1, wherein the bridging reagent contains at least three epoxide groups per molecule.

6. A membrane as claimed in claim 5, wherein the bridging reagent is the compound

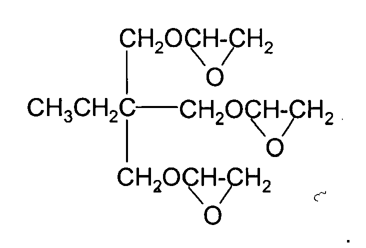

7. A membrane as claimed in claim 1, wherein the bridging reagent is bisphenol A glycidyl ether [BPAGDE] and/or 1,4-butanediol diglycidyl ether.

8. A membrane as claimed in claim 1, wherein the solution prepared in step A) contains from 0.1 to 7 mol% of the bridging reagent per unit of the basic polymer.

9. A membrane as claimed in claim 1, wherein polybenzimidazoles, polyimidazoles, polyvinylimidazoles, polybenzobisimidazoles and copolymers thereof are used as basic polymer.

10. A membrane as claimed in claim 9, wherein polybenzimidazoles used have the formula: 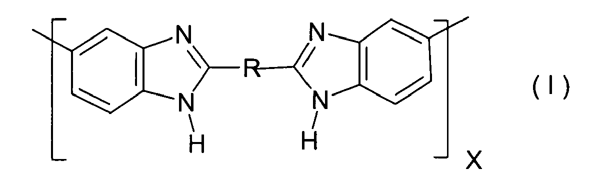 where R is alkylene, perfluoroalkylene or a substituent of one of the following formulae: 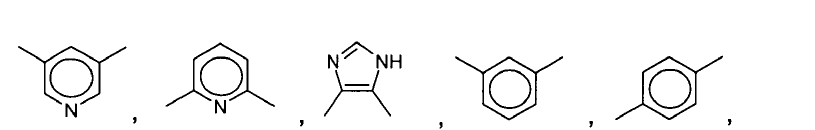 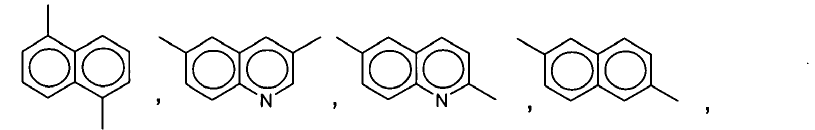 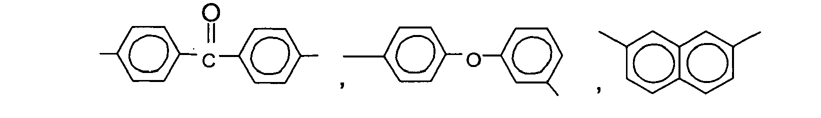 and each alkylene and perfuoroalkylene group R preferably has from 1 to 10 carbon atoms, particularly preferably from 1 to 6 carbon atoms.

11. A membrane as claimed in claim 9, wherein polybenzobisimidazoles used have the formula 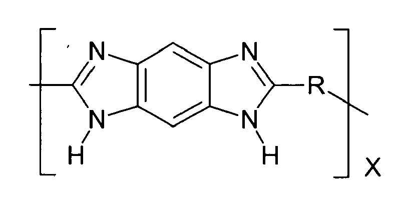 where R is as defined in claim 10.

12. A membrane as claimed in claim 1, wherein the further polymer based on a polysulfone (polymer II) comprises one or more polysulfones comprising recurring units which have linking sulfone groups and correspond to the formulae 2A, 2B, 2C, 2D, 2E, 2F and/or 2G:
-O-R-SO₂-R- (2A)
-O-R-SO₂-R-O-R- (2B)
-O-R-SO₂-R-O-R-R- (2C) 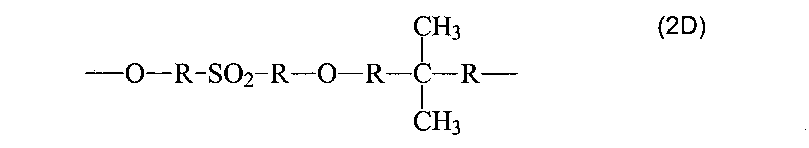
-O-R-SO₂-R-R-SO₂-R- (2E)
-O-R-SO₂-R-R-SO₂-R-O-R-SO₂-] (2F)
⁅O-R-SO₂-R⁆⁅SO₂-R-R⁆ ( 2G),
where the radicals R are identical or different and are each, independently of one another, 1,2-phenylene, 1,3-phenylene, 1,4-phenylene, 4,4'-biphenyl, a divalent radical of a heteroaromatic, a divalent radical of a C10-aromatic and/or a divalent radical of a C14-aromatic, where the polysulfone preferably has no sulfonic acid groups.

13. A membrane as claimed in claim 12, wherein the number average molecular weight of the polysulfone is greater than 30,000 g/mol.

14. A membrane as claimed in claim 1, wherein the solution prepared in step A) comprises from 1 to 99 percent by weight of the basic polymer, with the bridging reagent and the basic catalyst being included, and from 99 to 1 percent by weight of the polymer based on polysulfone.

15. A membrane as claimed in claim 1, wherein bridging in step D) is carried out by heating, so that bridging (step D) and drying (step C) are carried out simultaneously in one step.

16. A membrane as claimed in claim 1, wherein drying of the film is carried out at a temperature below the reaction temperature of the bridging reagent and the film is subsequently heated further for the purpose of bridging.

17. A membrane as claimed in claim 1, wherein bridging in step D) is carried out by irradiation with electromagnetic waves (photochemical reaction).

18. A membrane as claimed in claim 1, wherein the strong acid used in step E) is phosphoric acid and/or sulfuric acid.

19. A membrane as claimed in claim 1, wherein the treatment in step E) is carried out using water or an aqueous acid and the polysulfone bears sulfonic acid groups and/or protonated sulfonic acid groups.

20. A membrane as claimed in claim 1, wherein basic catalysts used are basic oxides and hydroxides of the elements of main groups I, II and III of the Periodic Table, hydrides of the elements of main group I of the Periodic Table and organolithium compounds.

21. A membrane as claimed in claim 20, wherein basic catalysts used are KOH, LiOH, NaOH, RbOH, CsOH, Ca(OH)₂, Mg(OH)₂, Ba(OH)₂, LiH, NaH, KH, methyllithium and/or butyllithium.

22. A membrane as claimed in claim 1, wherein the basic catalyst is added to the solution in step A) in amounts of from 0.01 to 5 mol%, based on the bridging reagent used.

23. The use of a membrane as claimed in any of claims 1 to 22 for producing membrane-electrode units.

24. The use of a membrane as claimed in any of claims 1 to 22 for producing fuel cells.

25. A membrane-electrode unit comprising at least one electrode and at least one membrane as claimed in any of claims 1 to 22.

26. A fuel cell comprising at least one membrane-electrode unit as claimed in claim 25.

## Revendications

1. Membrane constituée à base de polymère ponte, obtenue par un procédé comportant les démarches suivantes:
A. Production d'une solution contenant un polymère basique (polymère I) avec au moins un groupe amino dans une unité de répétition et au moins un agent de pontage et en plus, au moins un catalyseur basique dans au moins un solvant approprié,
B. Imprégnation d'un film avec la solution obtenue à la démarche A),
C. Extraction du solvant utilise en démarche A),
D. Réalisation de réaction de pontage au niveau du film obtenu selon démarche C),
E. Dopage du film obtenu selon la démarche D) avec un acide fort, **caractérisé en ce que**, dans la démarche A) est mélangé, à coté du polymère basique (polymère I), au moins un autre polymère à base d'un polysulfone (polymère II).

2. Membrane selon revendication 1, **caractérisée en ce que** l'agent de pontage représente au moins deux groupements époxyde ou isocyanate pro molécule.

3. Membrane selon revendication 1, **caractérisée en ce que** l'agent de pontage est au moins une liaison de la formule (II) et/ou (III) 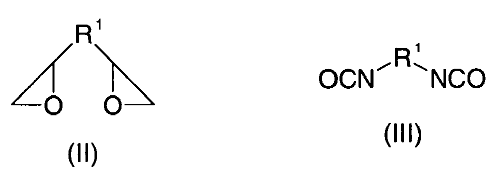 où R¹ représente un groupement hydrocarbonate contenant 1 à 30 atomes de carbone.

4. Membrane selon revendication 3, **caractérisée en ce que**, R¹ vaut 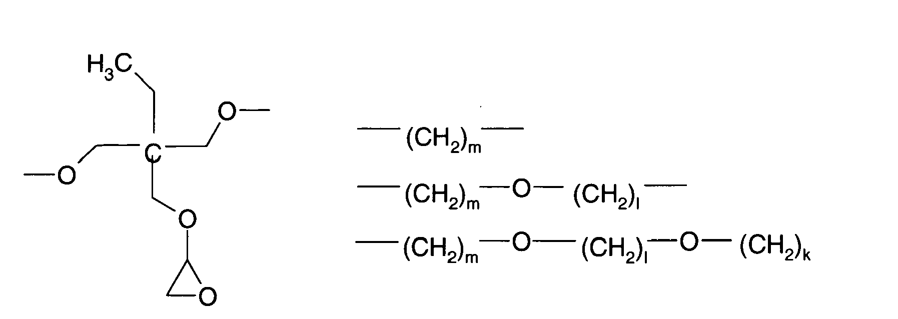 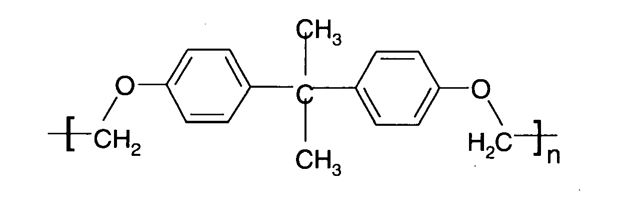 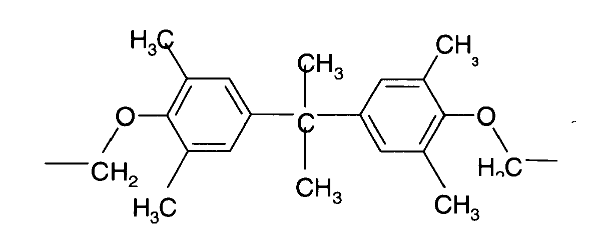 où m, k et I sont respectivement identiques ou différents, et représentent chacun un nombre entier d'une valeur de 1 à 6, n représente un nombre entier d'une valeur de 1 à 10, de préférence n vaut 1.

5. Membrane selon revendication 1, **caractérisée en ce que** l'agent de pontage comporte au moins trois groupements époxyde pro molécule.

6. Membrane selon revendication 5, **caractérisée en ce que** l'agent de pontage est la liaison suivante

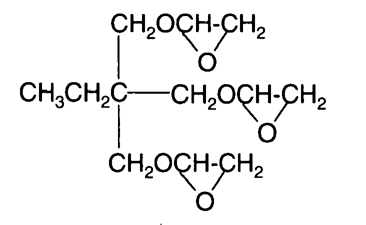

7. Membrane selon revendication 1, **caractérisée en ce que** l'agent de pontage est bis-phénol-A-glycidyléther [BPAGDE] et/ou 1,4 butyl-diglycidyléther.

8. Membrane selon revendication 1, **caractérisée en ce que** la solution selon démarche A) contient 0,1 à 7 Mol-% d'agent de pontage pro unité du polymère basique.

9. Membrane selon revendication 1, **caractérisée en ce que** comme polymère basique, on utilise Polybenzimidazole, Polyimidazole, Polyvinylimidazole, Polybenzbisimidazole ainsi que leurs Copolymères.

10. Membrane selon revendication 9, **caractérisée en ce que** on utilise comme Polybenzbisimidazole, ceux correspondants à la formule : 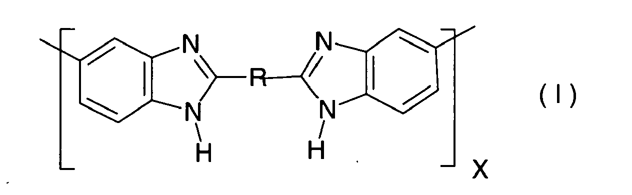 où R représente des Alkyle, Perfluoralkyle ou un substitué d'une des formules suivantes : 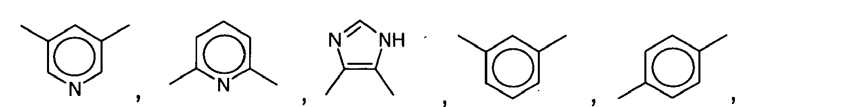 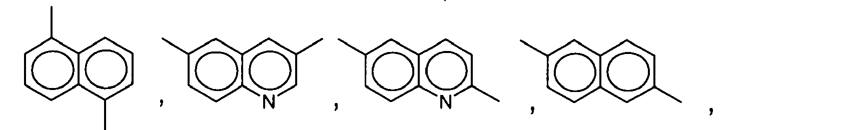 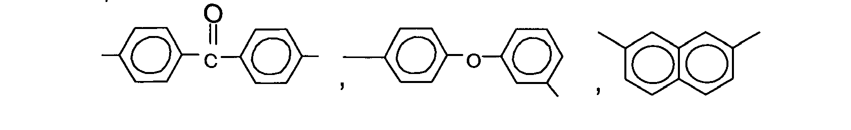 Où en plus chacun des groupements alkyle et perfluoralkyle, pouvant valoir R, présente de préférence 1 à 10 atomes de carbones, et en préférence particulière 1 à 6 atomes de carbone.

11. Membrane selon revendication 9, **caractérisée en ce que** on utilise comme Polybenzbisimidazole, ceux correspondants à la formule 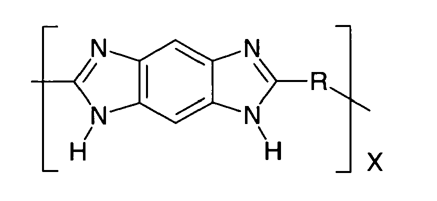 Où R a la signification donnée sous revendication 10.

12. Membrane selon revendication 1, **caractérisée en ce que** comme autre polymère à base d'un polysulfone (polymère II), un ou plusieurs polysulfone, qui présentent des unités répétitives avec des groupements sulfone associés, conformément aux formules générales 2A, 2B, 2C, 2D, 2E, 2F et/ou 2G.
-O-R-SO₂-R- (2A)
-O-R-SO₂-R-O-R- (2B)
-O-R-SO₂-R-O-R-R- (2C) 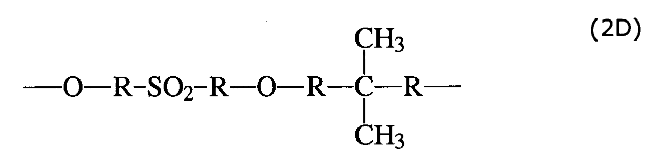
-O-R-SO₂-R-R-SO₂-R- (2E)
-O-R-SO₂-R-R-SO₂-R-O-R-SO₂-] (2F)
⁅O-R-SO₂-R⁆⁅SO₂-R-R⁆ (2G)
Où les radicaux R indépendamment l'un de l'autre, peuvent être identiques ou différents l'un de l'autre, et représentent 1,2-phénylène, 1,3-phénylène, 1,4-phénylène, 4,4'-biphényl, un radical bivalent d'un hétéroaromate, un radical bivalent d'un C10-Aromate et/ou un radical bivalent d'un C14-Aromate, où le polysulfone de préférence ne présente aucun groupement d'acide sulfonique.

13. Membrane selon revendication 12, **caractérisée en ce que** la moyenne du poids moléculaire du polysulfone est supérieur à 30.000 g/mol.

14. Membrane selon revendication 1, **caractérisée en ce que** la solution selon démarche A) contient entre 1 et 99 pourcentage en poids du polymère basique, et où l'agent de pontage et le catalyseur basique sont contenus, et entre 99 à 1 pourcentage en poids du polymère, est à base de polysulfone.

15. Membrane selon revendication 1, **caractérisée en ce que** le pontage dans démarche D) a lieu par augmentation de température, pour que le pontage (démarche D) et la dessiccation (démarche C), se réalisent parallèlement en un seul coup.

16. Membrane selon revendication 1, **caractérisée en ce que** la dessiccation du film se fait à une température inférieure à la température de réaction de l'agent de pontage, et ensuite le film est échauffé pour réaliser le pontage.

17. Membrane selon revendication 1, **caractérisée en ce que** le pontage dans démarche D), à lieu à laide d'une irradiation avec des ondes électromagnétiques (réaction photochimique).

18. Membrane selon revendication 1, **caractérisée en ce que** comme acide fort dans démarche E), on utilise acide phosphorique et/ou acide sulfurique.

19. Membrane selon revendication 1, **caractérisée en ce que** le traitement dans démarche E) est réalisé avec de Léau ou un acide aqueux, et le polysulfone présente des groupes acide sulfonique et/ou des groupes acide sulfonique protoné.

20. Membrane selon revendication 1, **caractérisée en ce que** comme catalyseurs basiques, sont utilisés, des oxydes et hydroxydes des groupes principaux I., II. et III. de la classification périodique, hybrides du groupe principal I. de la classification périodique et Lithium-organyle.

21. Membrane selon revendication 20, **caractérisée en ce que** comme catalyseurs basique, sont utilisés, KOH, LiOH, NaOH, RbOH, CsOH, Ca(OH)₂, Mg(OH)₂, Ba(OH)₂, LiH, NaH, KH, méthyllithium et/ou butyllithium.

22. Membrane selon revendication 1, **caractérisée en ce que** le catalyseur basique est ajouté à la solution obtenue selon démarche A), en quantités de 0,01 à 5 Mol-%, relativement à l'agent de pontage utilisé.

23. Utilisation de membrane selon lune des revendications 1 jusqu'à 22 pour fabrication des unités électrodes-membranes.

24. Utilisation de la membrane selon lune des revendications 1 jusqu'à 22 pour fabrication de piles à combustible.

25. Une unité électrode-membrane comprenant au moins une électrode et au moins une membrane selon lune des revendications 1 jusqu'à 22.

26. Pile à combustible comprenant au moins une unité électrode-membrane selon revendication 25.
